# EUROPÄISCHE PATENTANMELDUNG

(11) **EP 0 921 341 A2**
(43) Veröffentlichungstag der Anmeldung: **09.06.1999**
(21) Anmeldenummer: 98811121.7
(22) Anmeldetag: 10.11.1998
(51) Int. Cl.: F16L 23/036, F16L 23/16

(54) **Rohrverbindung**

(30) Priorität: 04.12.1997 CH 279597
(71) Anmelder: Georg Fischer Rohrleitungssysteme AG, CH-8201 Schaffhausen (CH)
(72) Erfinder: Brüggemann-Mortier, Klaus, 8200 Schaffhausen (CH)
(74) Vertreter: Weibel, Beat

(57) **Zusammenfassung**

Bei einer Rohrverbindung mit stirnseitig einander gegenüberstehenden Bunden (12,14) sind in den Stirnflächen (20,22) der Bunde ringförmige Nuten (28,30) für einen Dichtungsringes (34) angeordnet. Die Bunde mit dem zwischenliegenden Dichtungsring sind mittels einer lösbaren Spannvorrichtung unter Bildung einer fluiddichten Verbindung gegeneinander verspannt. Der durch die Nuten (28,30) begrenzte Aufnahmeraum (32) für den Dichtungsring (34) grenzt unter Bildung eines umlaufenden Oeffnungsspaltes (36) unmittelbar an die dem Medium zugewandte Innenseite (38) der Bunde (12,14), so dass der den Oeffnungsspalt verschliessende Teil des Dichtungsringes mit der Innenseite der Bunde im wesentlichen fluchtet. Dadurch entsteht eine totraumfreie Abdichtung des Mediums gegenüber der Umgebung.

## Beschreibung

Die Erfindung betrifft eine Rohrverbindung mit stirnseitig einander gegenüberstehenden Bunden und in der Stirnfläche wenigstens einer der Bunde angeordneter ringförmiger Nut zur Aufnahme eines Dichtungsringes, wobei die Bunde mit dem zwischenliegenden Dichtungsring mittels einer lösbaren Spannvorrichtung unter Bildung einer fluiddichten Verbindung gegeneinander verspannt sind.

Bei bekannten Rohrverbindungen mit Bundbuchsen und Kunststoffrohren, auf deren miteinander zu verbindenden Rohrenden jeweils eine ebenfalls aus Kunststoff gefertigte und üblicherweise mit dem Rohrende verklebte oder verschweisste Bundbuchse aufgesetzt ist, sind in den Stirnseiten der Bunde ringförmige Nuten zur Aufnahme eines oder mehrerer Dichtungsringe angeordnet. Eine fluiddichte und mechanisch stabile Verbindung von zwei aneinanderliegenden Bundbuchsen mit zwischengeordneter Dichtung erfolgt beispielsweise über Losflansche, die miteinander verschraubt werden und dadurch den für die fluiddichte Verbindung erforderlichen Anpressdruck der Bundbuchsendichtflächen auf die zwischenliegende Dichtung erzeugen.

Ein Nachteil der bisher verwendeten Anordnung von O-Ringen zwischen den miteinander zu verbindenden Bunden liegt darin, dass an der Verbindungsstelle zwischen den Bunden ein offener Spalt und damit ein von der Innenseite der Bunde ausgehender Totraum entsteht.

Der Erfindung liegt daher die Aufgabe zugrunde, eine Rohrverbindung der eingangs genannten Art zu schaffen, die eine totraumfreie Abdichtung des durch die Rohrverbindung geführten Mediums gegenüber der Umgebung ermöglicht.

Zur erfindungsgemässen Lösung der Aufgabe führt, dass der durch die Nuten begrenzte Aufnahmeraum für den Dichtungsring unter Bildung eines umlaufenden Oeffnungsspaltes unmittelbar an die dem Medium zugewandte Innenseite der Bunde grenzt, so dass der den Oeffnungsspalt verschliessende Teil des Dichtungsringes mit der Innenseite der Bunde im wesentlichen fluchtet.

Bei Betätigung der Spannvorrichtung wird der Dichtungsring, z.B. ein O-Ring, verformt, so dass eine totraumfreie Abdichtung der Rohrverbindung entsteht.

Bevorzugt wird eine der Nuten zur Aufnahme des Dichtungsringes in wenigstens einer der Stirnflächen der Bunde so ausgestaltet, dass der Dichtungsring während der Montage der Rohrverbindung in einem der Bunde gehalten wird.

Bei einer zweckmässigen Ausgestaltung der erfindungsgemässen Rohrverbindung weisen die Bunde im Bereich ihrer Stirnflächen zumindest teilweise ineinandergreifende Elemente auf. Beim Zusammenbau der Rohrverbindung ergibt sich so eine selbsttätige Zentrierung der Bunde, was zusammen mit der oben beschriebenen Klemmung des O-Ringes in einem der Bunde den Montagevorgang wesentlich vereinfacht.

Als Spannvorrichtung zur Herstellung der Rohrverbindung können beispielsweise Losflansche dienen, die miteinander verschraubt werden.

Bei einer besonders vorteilhaften Ausgestaltung der erfindungsgemässen Rohrverbindung sind die Aussenseiten der Bunde unter Ausbildung von Keilflächen angeschrägt und die Spannvorrichtung weist den Keilflächen der Bunde entsprechend angeschrägte Gegenflächen auf. Die Spannvorrichtung übergreift beide Bunde über ihren Umfang. Unter dem Einfluss der in Umfangrichtung gespannten Spannvorrichtung liegen die Keilflächen den Gegenflächen kraftschlüssig an.

Zum Aufbringen der Spannkraft kann beispielsweise ein Spannband mittig um den Umfang der Spannvorrichtung angeordnet sein. Bevorzugt sind jedoch zum Aufbringen der Spannkraft zwei Spannbänder symmetrisch zur Trennebene der Rohrverbindung um den Umfang der Spannvorrichtung angeordnet. Die durch die über die keilförmigen Kontaktflächen zwischen Bunden und Spannvorrichtung zu übertragenden Axialkräfte induzierten Biegemomente der Spannvorrichtung bewirken eine Aufweitung der Spannvorrichtung sowohl in axialer Richtung als auch in radialer Richtung. Die Aufweitung in radialer Richtung wird durch die beidseits der Spannvorrichtung angeordneten, in Umfangrichtung wirkenden Spannbänder behindert.

Die Spannbänder können auch in die Spannvorrichtung integriert sein, d.h. die Spannvorrichtung wirkt direkt als Spannband und wird als solches direkt gespannt.

Eine besonders zweckmässige Spannvorrichtung weist über den Umfang verteilt angeordnete Spannsegmente auf. Diese Segmente können beispielsweise Glieder einer Spannkette sein.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: einen Längsschnitt durch eine offene Rohrverbindung;
- Fig. 2: einen Längsschnitt durch die geschlossene Rohrverbindung von Fig. 1 mit eingelegtem Dichtungsring;
- Fig. 3: einen Längsschnitt durch die Rohrverbindung von Fig. 2 mit aufgesetzter Spannvorrichtung;
- Fig. 4: eine Schrägsicht auf die Rohrverbindung von Fig. 3.

Bei einer Rohrverbindung 10 sind zwei Rohrteile 16, 18 über stirnseitig angeformte Bunde 12, 14 lösbar miteinander verbunden. Die Rohrteile 16, 18 können Rohre oder Buchsen von auf die Enden der miteinander zu verbindenden Rohre aufgesetzten Bundbuchsen bzw. Vorschweissbunden sein.

Die Stirnfläche 20 des Bundes 12 ist an dessen Aussenseite mit einem von der Stirnfläche abragenden Vorsprung 24 ausgestattet, der bei geschlossener Rohrverbindung in eine an der Stirnfläche 22 des Bundes 14 entsprechend gegengeformte Ausnehmung 26 eingreift. Zwei in die Stirnflächen 20, 22 eingeformte ringförmige Nuten 28, 30 mit querschnittlich etwa kreisrunder Kontur bilden in geschlossenem Zustand einen Aufnahmeraum 32 für eine O-Ring-Dichtung 34.

Die Nuten 28, 30 sind im Bereich der Innenseite 38 der Rohrteile 16, 18 so angeordnet, dass sie im geschlossenen Zustand der Rohrverbindung 10 einen Oeffnungsspalt 36 bilden, der bei geschlossener Rohrverbindung vom O-Ring 34 verschlossen ist. Durch die fluchtende Anordnung des den Oeffnungsspalt 36 verschliessenden Teils des O-Ringes 34 mit der Innenseite 38 der Bunde 12, 14 entsteht eine totraumfreie Abdichtung der Rohrvorbindung 10.

Die Nut 30 im Bund 14 ist gegenüber der Nut 28 im Bund 12 stärker ausgenommen, so dass der in die Nut 30 eingelegte O-Ring 34 während der Montage der Rohrverbindung 10 im Bund 14 gehalten wird.

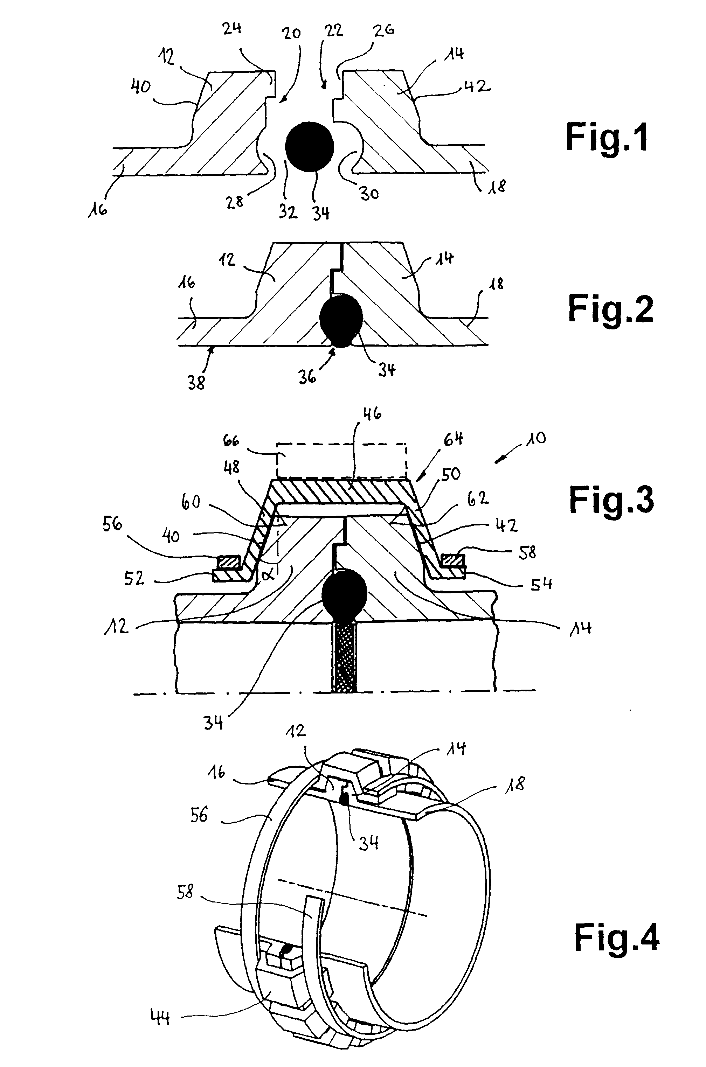

Wie in Fig. 3 und 4 gezeigt wird die Rohrverbindung 10 mittels einer lösbaren Spannvorrichtung 64 fixiert. Die Spannvorrichtung 64 umfasst einzelne, zu einer Spannkette zusammengefügte Spannsegmente 44. Jedes Spannsegment 44 weist einen Bodenteil 46 mit von diesem abragenden Schenkelteilen 48, 50 auf, deren freie Enden als Auflagestreifen 52, 54 für Spannbänder 56, 58 nach aussen abragen. Die Innenflächen 60, 62 der Schenkelteile 48, 50 sind vom Bodenteil 46 ausgehend um einen Winkel α nach aussen geneigt angeordnet. Die Bunde 12, 14 sind an deren Aussenseite mit dem gleichen Neigungswinkel α unter Bildung von Keilflächen 40, 42 angeschrägt, so dass die Innenflächen 60, 62 der Schenkelteile 48, 50 den Keilflächen 40, 42 bei aufgesetzter Spannvorrichtung 64 und bei gespannten Spannbändern 56, 58 reib- bzw. kraftschlüssig anliegen.

In Fig. 3 ist gestrichelt eine andere Möglichkeit einer Spannvorrichtung angedeutet, bei der ein zentral um den Umfang der Spannvorrichtung 64 gelegtes Spannband 66 anstelle oder zusätzlich zu den seitlichen Spannbändern 56, 58 angeordnet ist.

Anstelle der in Fig. 3 und 4 gezeigten Spannvorrichtung 64 können die Bunde 12, 14 selbstverständlich auch auf herkömmliche Art mit geschraubten Losflanschen gegeneinander verspannt werden.

## Patentansprüche

1. Rohrverbindung mit stirnseitig einander gegenüberstehenden Bunden (12,14) und in der Stirnfläche (20,22) wenigstens einer der Bunde angeordneter ringförmiger Nut (28,30) zur Aufnahme eines Dichtungsringes (34), wobei die Bunde mit dem zwischenliegenden Dichtungsring mittels einer lösbaren Spannvorrichtung (64) unter Bildung einer fluiddichten Verbindung gegeneinander verspannt sind,
dadurch gekennzeichnet, dass
der durch die Nuten (28,30) begrenzte Aufnahmeraum (32) für den Dichtungsring (34) unter Bildung eines umlaufenden Oeffnungsspaltes (36) unmittelbar an die dem Medium zugewandte Innenseite (38) der Bunde (12,14) grenzt, so dass der den Oeffnungsspalt verschliessende Teil des Dichtungsringes mit der Innenseite der Bunde im wesentlichen fluchtet.

2. Rohrverbindung nach Anspruch 1, dadurch gekennzeichnet, dass eine der Nuten (30) zur Aufnahme des Dichtungsringes (34) in wenigstens einer der Stirnflächen (22) der Bunde so ausgestaltet ist, dass der Dichtungsring (34) während der Montage der Rohrverbindung in einem der Bunde (14) gehalten wird.

3. Rohrverbindung nach Anspruch 1 oder 2, dadurch gekennzeichnet, dass der Dichtungsring (34) ein O-Ring ist.

4. Rohrverbindung nach einem der Ansprüche 1 bis 3, dadurch gekennzeichnet, dass die Bunde (12,14) im Bereich ihrer Stirnflächen (20,22) zur Zentrierung zumindest teilweise ineinandergreifende Elemente (24,26) aufweisen.

5. Rohrverbindung nach einem der Ansprüche 1 bis 4, dadurch gekennzeichnet, dass die Spannvorrichtung (64) aus miteinander verschraubten Losflanschen besteht.

6. Rohrverbindung nach einem der Ansprüche 1 bis 4, dadurch gekennzeichnet, dass die Aussenseiten der Bunde (12,14) unter Ausbildung von Keilflächen (40,42) angeschrägt sind und die Spannvorrichtung (64) den Keilflächen der Bunde entsprechend angeschrägte Gegenflächen (60,62) aufweist, wobei die Spannvorrichtung beide Bunde über ihren Umfang übergreift und die Keilflächen den Gegenflächen unter dem Einfluss der in Umfangrichtung gespannten Spannvorrichtung kraftschlüssig anliegen.

7. Rohrverbindung nach Anspruch 6, dadurch gekennzeichnet, dass zum Aufbringen der Spannkraft ein Spannband (66) mittig um den Umfang der Spannvorrichtung (64) angeordnet ist.

8. Rohrverbindung nach Anspruch 6 oder 7, dadurch gekennzeichnet, dass zum Aufbringen der Spannkraft zwei Spannbänder (56,58) symmetrisch zur Trennebene der Rohrverbindung um den Umfang der Spannvorrichtung (64) angeordnet sind.

9. Rohrverbindung nach Anspruch 7 oder 8, dadurch gekennzeichnet, dass die Spannbänder (66,56,58) in die Spannvorrichtung (64) integriert sind.

10. Rohrverbindung nach einem der Ansprüche 7 bis 9, dadurch gekennzeichnet, dass die Spannvorrichtung (64) einteilig ausgebildet ist.

11. Rohrverbindung nach einem der Ansprüche 7 bis 9, dadurch gekennzeichnet, dass die Spannvorrichtung (64) über den Umfang verteilt angeordnete Spannsegmente (44) aufweist.

12. Rohrverbindung nach Anspruch 11, dadurch gekennzeichnet, dass die Spannsegmente (44) Glieder einer Spannkette sind.
